# EUROPEAN PATENT SPECIFICATION

(11) **EP 1 964 899 B1**
(45) Date of publication and mention of the grant of the patent: **27.10.2010**
(21) Application number: 08003660.1
(22) Date of filing: 28.02.2008
(51) Int. Cl.: C09J 5/06, F16B 11/00

(54) **Method for joining elements of a composite panel, particularly for the body of a motor vehicle, and apparatus therefor**
Verfahren zur Befestigung von Elementen eines Verbundpaneels, insbesondere der Karosserie eines Kraftfahrzeugs und Gerät dazu
Procédé de fixation des éléments d'un panneau composite, particulièrement le corps d'un véhicule à moteur, et appareil correspondant

(30) Priority: 01.03.2007 IT TO20070156
(43) Date of publication of application: 03.09.2008
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- EP-A- 0 339 493
- EP-A- 0 364 191
- EP-A- 1 785 340
- JP-A- 6 065 545
- JP-A- 57 201 774
- US-A- 5 273 606

## Description

The present invention refers in general to the fastening of the members of a composite panel, particularly of a motor vehicle body. Since composite panels are often used as members of the body of modern motor vehicles, reference will be made in the following description to a composite panel for a motor vehicle, in spite of the fact such panels may also be used in different contexts.

Composite panels for the motor vehicle body usually comprise a pair of members connected to each other, typically an inner skeleton having the function of a support and resisting structure, and an outer covering panel which mainly carries out a shape function. In the most general case, the skeleton has a generally reticular shape, defined by a plurality of ribs which surround a series of cavities.

In assembling a composite panel, its members are preliminarily connected by seaming, folding the perimetral edge of the covering panel over the perimetral edge of the skeleton, after having interposed between the perimetral edges thereof a polymeric thermosetting adhesive of the so-called "structural" type, and after having interposed a polymeric adhesive of the so-called "semi-structural" type, also thermosetting, between the edges of the cavities of the skeleton and the inner surface of the covering panel.

JP-57-201774-A discloses a composite panel for a motor vehicle body comprising an outer panel and an inner panel having a plurality of cavities. The peripheral edges the outer panel are hemmed on the rim of the inner panel, a quantity of a conventional bond being interposed between the inner and the outer panel only in proximity of their peripheral edges, in order to provide a water-proof peripheral joint.

Document EP 0 364 191 -A describes an apparatus for fastening the members of a composite panel by localised heating of a binder.

Usually, an adhesive of the structural type has a pasty consistency and is characterized by a high shearing strength that, in its fully polymerized condition, is in general greater than 100 daN/cm². The consistency of a typical semi-structural adhesive is instead fluid, almost liquid, and it is characterized, once polymerized, by a shearing strength falling, in general, between 15 and 50 daN/cm².

After the two members of the composite panel have been preliminarily connected by seaming, they may be fastened by performing weldings at predetermined zones, for example by an indirect projection resistance welding process. As an alternative or in addition, the members of the composite panel may be fastened by heating the panel at its perimetral edges where the structural adhesive is arranged, at a temperature lower than the polymerization temperature, for example close to about 180°C, using typically induction heating apparatuses. In this manner, the structural adhesive reaches a pre-polymerization condition, so that a peripheral coupling of the two members of the panel is attained.

After the panel has been assembled on the body, during the so-called "hinged panels fitting" step, the whole motor vehicle is painted and undergoes a heating step at a temperature of the order of 200°C, during which the paint as well as the structural and semi-structural adhesives interposed between the members of each panel reach the complete cross-linking, so that the members of the composite panel are definitively fastened.

In particular, the invention relates to a method for fastening the members of a composite panel, of the type mentioned in the preamble of claim 1.

Modern motor vehicles, besides having to satisfy more and more severe requirement for safety of the passengers, must comply with safety regulations which takes into account the event of knocking down of pedestrians involved in road accidents. In particular, in order to minimize damages to persons in the event of an impact, the composite panels of the motor vehicle body, such as the front bonnet hatch, must be made by particularly thin sheets, so that they turn out to be very elastic in order to stand up wide deformations as a result of an impact.

On the other hand, using very thin sheets makes problematic to hold the design geometry of the panels between the initial seaming connection step and the final polymerization of the adhesives, with the risk that deformations arising in the various assembling steps turn out to be excessive, so that they may cause a loss in the shape continuity with the other body panels that cannot be recovered after the subsequent "hinged panels fitting" and painting steps, and which may cause rejection of defective panels.

In order to overcome these drawbacks, the subject of the invention is a method such as claimed.

By virtue of this idea of solution, the method of the invention allows that a preliminary connection of the members of a composite panel is obtained, which allows to effectively hold the design geometry of the panel, in spite of the fact that it is made by very thin sheets, in particular until the "hinged panels fitting" step in which it will be assembled together with the other panels in order to define a body, and in the subsequent painting step, before it undergoes a heating step in order to bring the adhesives to the complete polymerization condition.

The subject of the present invention is also an apparatus for fastening the members of a composite panel, particularly of a motor vehicle body.

The invention will be better clarifid in the following detailed description, which has been made with reference to the appended drawings, given as a non-limitative example, which show a preferred embodiment of a fastening apparatus, and in which:
- figure 1 is a schematic perspective view of a composite panel of a motor vehicle, in particular of a front bonnet hatch,
- figure 2 is a perspective view of the panel of figure 1, to which apparatuses adapted to carry out the method of the invention are associated,
- figure 3 is another perspective view of the panel of figure 2, from arrow III of such a figure,
- figure 4 is an enlarged schematic side elevational view of a detail of figure 2, sectioned along line IV-IV, and
- figure 5 is a perspective view of the panel of figure 1 associated with a fastening apparatus which comprises induction heating apparatuses.

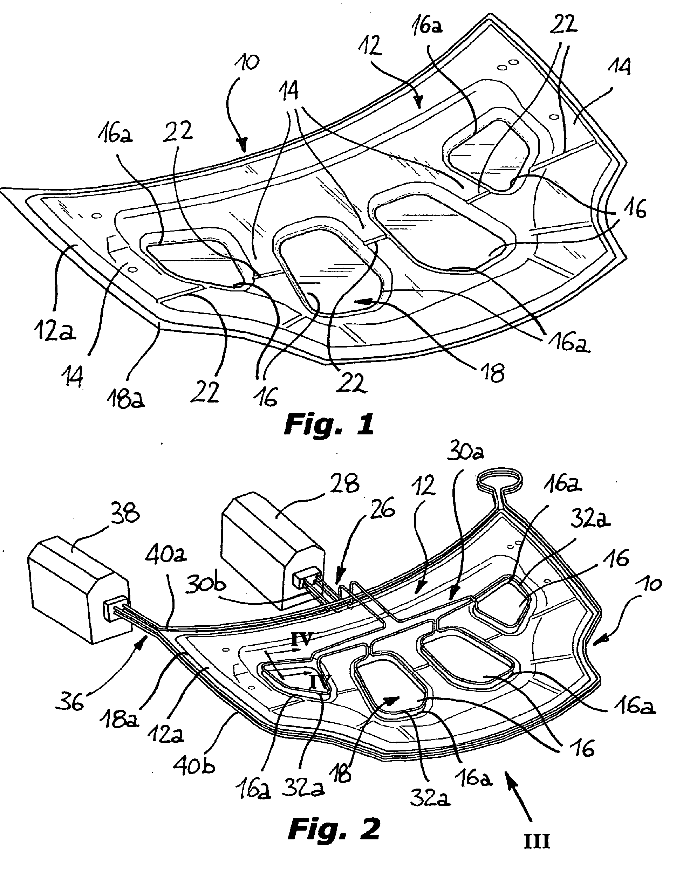

With initial reference to figure 1, a composite panel for a motor vehicle body, such as a front bonnet hatch, is indicated 10 in its whole.

The panel 10 comprises two metallic sheet members arranged side by side, which consist of a skeleton 12 having a general reticular structure defined by a series of ribs 14 between which cavities 16 delimited by edges 16a are defined, and a covering panel 18 intended to be arranged outside, in the assembled condition of the panel 10 on the body of the relevant motor vehicle. In particular, the sheets which constitutes the members 12 and 18 are particularly thin, for example with a thickness in the range between about 0.5 and 0.8 mm, and the skeleton 12 may have a series of zones 22 preset for bending, so that the structure of the composite panel 10 turns out to be very elastic and adapted to be easily deformed in the case of an impact, for example with a person.

The skeleton 12 and the covering panel 18 are preliminarily connected at the respective peripheral edges 12a and 18a by folding the edge 18a over the edge 12a, carried out during a peripheral seaming operation. Moreover, weldings may be carried out at predetermined zones of the panel 10, so as to connect preliminarily the skeleton 12 with the covering panel 18.

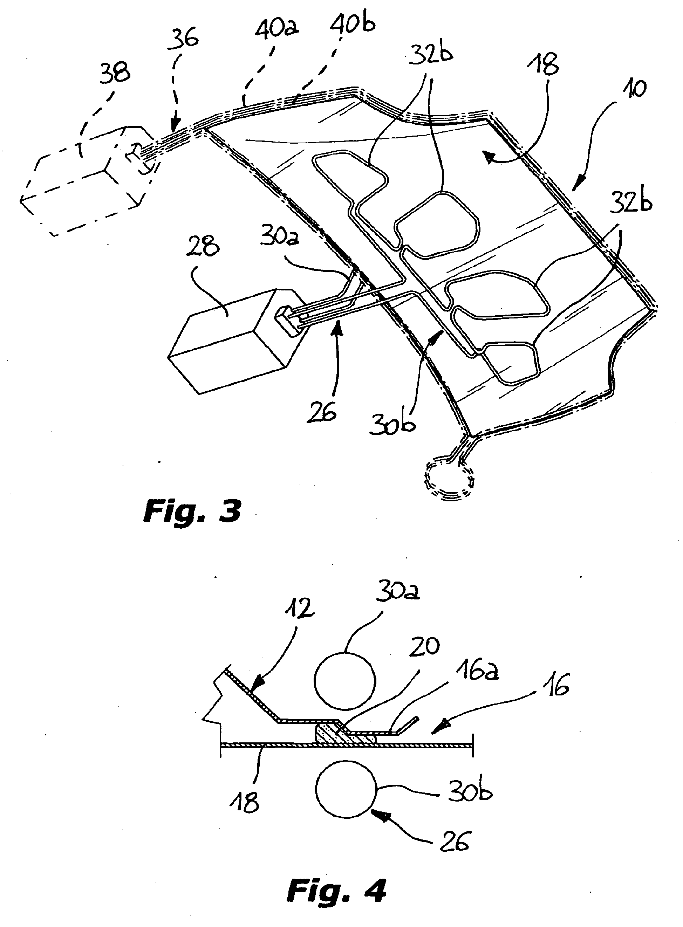

Before the skeleton 12 and the panel 18 are connected by seaming and possible welding, a thermosetting polymeric adhesive of the so-called structural type (not shown in the figures), for example of the type sold by Henkel Company under the name Terokal 4595, is interposed between the edges 12a and 18a of the members 12 and 18. Moreover, a thermosetting polymeric adhesive of the so-called semi-structural type (indicated by numeral reference 20 in figure 4), for example of the type sold by Company Henkel under the name Terokal 4797, is interposed between the edges 16a of the cavities 16 and the surface of the panel 18 which faces the skeleton 12.

In order to allow the panel 10 to be able to hold the design geometry during the various steps of its assembling, in particular until it undergoes a final heating step during which the adhesives interposed between the members thereof will reach the complete polymerization, in spite of the thin sheets used to make its members 12 and 18, the method of the invention comprises the step of subjecting the panel 10 to a localized heating operation at a zone close to the edge 16a of each cavity 16 of the skeleton 12, during which the semi-structural adhesive 20 is brought, from its substantially fluid condition of delivery, to a viscous and partially pre-polimerized condition in which it carries on at least a small coupling action of the edges 16a of the cavities 16 with respect to the panel 18.

Heating of the semi-structural adhesive 20 is conveniently attained by means of an induction heating apparatus indicated 26 in its whole and schematically shown in figures 2 to 4. The apparatus 26 includes an induction control device 28 connected with a power supply and refrigeration unit (of type known per se and not shown), from which a main tubular duct 30a extends, which has a series of loops 32a whose shape and number correspond to those of the edges 16a of the cavities 16 of the skeleton 12 and is arranged above the panel 10. The duct 30a is conveniently provided with articulation means (not shown), for example arranged close to the device 26, adapted to allow to raise it when a composite panel 10 must be associated to the apparatus 26.

Moreover, a secondary shaped tubular duct indicated 30b in the figures, having a series of loops 32b which correspond to the loops 32a of the duct 30a and extending below the panel 10, may be provided.

The loops 32a of the duct 30a and the loops 32b of the duct 30b, when the latter is provided, in the operative condition shown in figures 2 to 4, are intended to be positioned close to the edge 16a of a cavity 16 of the skeleton 12 and to a corresponding portion of the panel 18, respectively, in order to be able to heat effectively the semi-structural adhesive 20 interposed between the members 12 and 18.

The composite panel 10 may also be heated at its peripheral edge by an auxiliary induction heating apparatus, indicated 36 in its whole, including a respective induction control device 38, which is also connected with a power supply and refrigeration unit (not shown), and comprising twin tubular ducts 40a and 40b so shaped as to correspond to the shape of the peripheral edge of the panel 10. The tubular ducts 40a and 40b of the auxiliary apparatus 36 are adapted to be arranged slightly above and slightly below, respectively, the peripheral edge of the panel 10, in order to effectively heat the polymeric structural adhesive interposed between the peripheral edges of the skeleton 12 and of the covering panel 18, at their seamed peripheral portion.

In a manner known per se, in the tubular ducts 30a, 40a, 40b and 30b, if the latter is provided, of the apparatuses 26 and 36, having an inner cavity in which a cooling fluid flows, a high frequency current flows which induces a magnetic flow in order to cause induction heating of the portions of the members 12 and 18 of the panel 10 arranged in their proximity, up to a temperature close to 180°C. In the case of the apparatus 26, this temperature is enough to cause, in a time of the order of a minute, a partial pre-polymerization of the semi-structural adhesive 20 interposed between the edges 16a of the cavities 16 and the panel 18, and, in the case of the apparatus 36, to cause a pre-polymerization of the structural adhesive 20 interposed between the peripheral edges 12a and 18a of the members 12 and 18, in such a manner to connect the members 12 and 18.

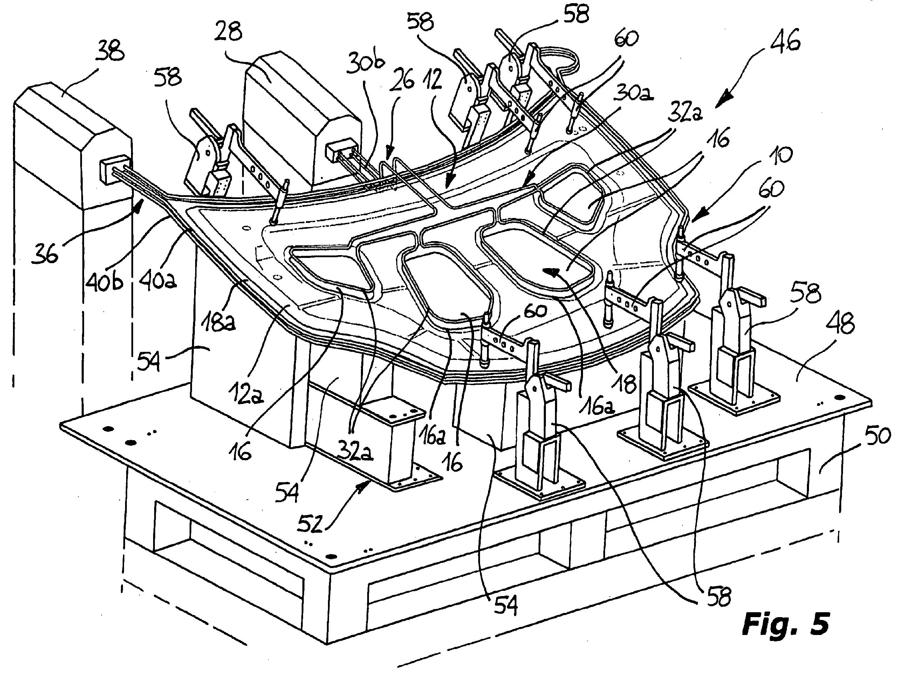

The heating apparatuses 26 and 36 may be conveniently associated in a single fastening apparatus indicated 46 in its whole in figure 5. The apparatus 46 comprises a base or bench including a platform 48 supported by a base structure 50 for resting it on the ground. A frame 52 is secured on the platform 48, which supports a series of blocks of non-magnetic material 54, for example of an insulating material, which define together a shaped support structure adapted to support at least the peripheral edge of a composite panel 10. The members 12 and 18 of such a panel 10 are already preliminary connected by seaming, and by possible weldings, at their respective peripheral edges 12a and 18a, a polymeric adhesive of the structural type having been interposed beforehand between the peripheral edges of the members 12 and 18, and a polymeric adhesive of the semi-structural type having been furthermore interposed between the edges 16a of the cavities 16 of the member 12 and the surface of the member 18.

Moreover, a series of reference and locking apparatuses 58, usually pneumatically or electrically driven, is provided on the platform 12, each of which comprises a movable arm 60 which can swing between a raised resting position, in which it is easily possible to place or remove a composite panel 10 from above, and a lowered locking position (shown in figure 5). In the lowered position of the arms 60, after the preassembled panel 10 has been rested on the blocks 54, the apparatus 58 holds the panel 10 as well as its members 12 and 18 in a firm configuration, in view of carrying out the fastening step of such members.

An electronic control unit (not shown in the figures), attend to manage in its whole the coordinated operation of the reference and locking apparatuses 58 as well as of the induction heating apparatuses 26 and 36 according to a preset timing, after a preassembled panel 10 has been placed on the blocks 54. This control unit may be independent if the apparatus 46 operates in an independent manner, or it may be integrated in a common control unit of an assembling line if the apparatus 46 forms part of an assembly of apparatuses to be selectively operated in sequence, of an automated assembling line for motor vehicle bodies.

In operation of the apparatus 46, a panel 10 with the respective members 12 and 18 already seamed and possibly welded at their peripheral edges 12a and 18a, is laid down from above on the shaped support structure defined by the blocks 54. In this condition, the arms 60 of the reference and locking apparatuses 58 as well as the tubular duct 30a of the apparatus 26, are in a raised configuration in order to allow the transfer of the panel 10.

Then, the control unit of the apparatus 46 controls lowering of the arms 60 of the apparatuses 58, so as to lock the members 12 and 18 of the panel 10 in the position for fastening, as well as of the tubular duct 30a of the apparatus 26.

Then, the devices 28 and 38 are driven for operating the heating apparatuses 26 and 36 in order to heat the respective tubular ducts 30a, 40a, 40b and 30b, if the latter is provided, in order that both the semi-structural adhesive 20 and the structural adhesive arranged at the peripheral edge of the composite panel 10, are brought to a pre-polymerized condition in which the structure of the panel 10 assumes a geometrically stable and sufficiently rigid and resistant configuration, so that the subsequent assembling operations of the panel 10 may be completed on the motor vehicle body.

The time of activation of the apparatus 26, which is required in order to reach the at least partial pre-polimerization of the semi-structural adhesive 20, may be greater than the time of activation of the apparatus 36 needed for obtaining the pre-polymerization of the structural adhesive interposed between the peripheral edges of the members 12 and 18, because of the different nature of such adhesives. In this case, the control unit will control the interruption of operation of the apparatus 36 before that one of the apparatus 26.

Once the fastening of the members 12 and 18 of a panel 10 has been attained, the control unit attend to bring back the arms 60 of the apparatuses 58 as well as the tubular duct 30a in the respective raised resting positions, in order that removal of the fastened panel 10 is allowed, as well as feeding of a new panel 10 to be fastened to the apparatus 46.

## Claims

1. Method for fastening the members of a composite panel, particularly of a motor vehicle body, in which the composite panel (10) comprises two metallic sheet members arranged side by side, which members consists of a skeleton (12) and of a covering panel (18) arranged side by side and preliminarily fastened by seaming at their peripheral edges (12a, 18a), the skeleton (12) having a general reticular structure defined by a series of ribs (14) between which at least a cavity (16) delimited by edges (16a) is defined, said edges (16a) being arranged adjacent to a corresponding zone of the inner surface of the covering panel (18), a polymeric adhesive of the semi-structural type (20) being interposed between the edges (16a) of each cavity (16) and the covering panel (18),
**characterized in that** it comprises the step of subjecting the composite panel (10) to a heating operation localized at a zone corresponding to the edges (16a) oaf each cavity (16) of the skeleton (12), in order to bring the respective semi-structural adhesive (20) from a substantially fluid condition of delivery to a viscous and pre-polymerized condition in which it performs at least a partial coupling action of the respective edge (16a) of the cavity (16), with the covering panel (18).

2. Method according to claim 1, **characterized in that** said heating operation is carried out by induction heating means (26).

3. Method according to claim 1 or 2, **characterized in that** said heating operation is carried out from a single side of the composite panel (10), preferably from a side thereof adjacent to the skeleton (12), on the side opposite to the covering panel (18).

4. Method according to claim 1 or 2, **characterized in that** said heating operation is carried out simultaneously from opposite sides of the composite panel (10), in particular from a side thereof adjacent to the skeleton (12), on the side opposite to the covering panel (18), and from its side adjacent to the covering panel (18), on the side opposite to the skeleton (12).

5. Method according to any one of claims 1 to 4, **characterized in that**, before carrying out said heating operation, the following steps are carried out:
- supporting the composite panel (10) on a shaped support structure (52, 54), and
- operating reference and locking means (58, 60) associated with said support structure (52, 54), in order to hold the members (12, 18) of the composite panel (10) in a predetermined contact configuration during carrying out of the heating operation.

6. Method according to any one of claims 1 to 5, **characterized in that** a polymeric adhesive of the structural type is interposed between the peripheral edges (12a, 18a) of the members (12, 18) of the composite panel (10), and **in that** it comprises the step of heating the peripheral edge (12a, 18a) of the composite panel (10) by auxiliary induction heating means (36).

7. Method according to claim 6, **characterized in that** the steps of heating the composite panel (10) at its peripheral edge (12a, 18a) and at the edges (16a) of each cavity (16) of the skeleton (12), are carried out simultaneously.

8. Apparatus for fastening the members of a composite panel, particularly of a motor vehicle body, **characterized in that** it comprises:
- a shaped support structure (52, 54) adapted to support a composite panel (10) including two metallic sheet members (12, 18) arranged side by side, one of said members being a skeleton (12) having a general reticular structure defined by a series of ribs (14) between which at least a cavity (16) delimited by edges (16a) is defined, the other member being a covering panel (18), a polymeric adhesive of the semi-structural type (20) being interposed between the edge (16a) of each cavity (16) of the skeleton (12) and the covering panel (18), and
- induction heating means (26) associated with the shaped support structure (52, 54) and adapted to cause a a localized heating of the composite panel (10) at zones thereof which corresponds to the edge (16a) of each cavity (16) of the skeleton (12), in order to bring the respective semi-structural adhesive (20) from a substantially fluid condition of delivery to a viscous and pre-polymerized condition in which it carries out at least a partial coupling action of the respective edge (16a) of the cavity (16) with the covering panel (18).

9. Apparatus according to claim 8, **characterized in that** said support structure (52, 54) comprises a series of blocks of non-magnetic material (54) supported by a frame (52).

10. Apparatus according to claim 8 or 9, **characterized in that** said induction heating means (26) comprise a main shaped induction heating member (30a), which can be arranged on one side of the composite panel (10) in a zone adjacent to the skeleton (12).

11. Apparatus according to claim 8 or 9, **characterized in that** said induction heating means (26) are susceptible to cause a simultaneous heating on opposite sides of the composite panel (10), and comprise a main shaped induction heating member (30a) which can be arranged on a first side of the composite panel (10) in a zone adjacent to the skeleton (12), as well as a secondary shaped induction heating member (30b) which can be arranged on a second side of the composite panel (10) in a zone adjacent to the covering panel (18).

12. Apparatus according to claim 10 or 11, **characterized in that** said main induction heating member (30a) is removable in order to be spaced from the shaped support structure (52, 54), so that resting and removal of a composite panel (10) with respect to such a structure (52, 54) are allowed.

13. Apparatus according to claim 12, **characterized in that** said main induction heating member (30a) has an articulation zone.

14. Apparatus according to any one of claims 8 to 13, **characterized in that** reference and locking means (58, 60) are associated with the support structure (52, 54), which are adapted to assure the correct positioning and the mutual locking of the members (12, 18) of the composite panel (10) when said heating means (26) are operated.

15. Apparatus according to any one of claims 8 to 14, **characterized in that** a polymeric adhesive of the structural type is interposed between the members (12, 18) of the composite panel (10) at the peripheral edges (12a, 18a) thereof, and **in that** the apparatus (46) includes auxiliary induction heating means (36) associated with the shaped support structure (52, 54) and adapted to cause heating of the composite panel (10) at its peripheral edge (12a, 16a), in order to bring the respective structural adhesive in a pre-polymerized condition.

16. Apparatus according to claim 15, **characterized in that** said auxiliary induction heating means (36) comprise at least an auxiliary induction heating member (40a, 40b) so shaped as to correspond to the periphery of the composite panel (10) and intended to be arranged in proximity to the peripheral edge of a composite panel (10) supported on the shaped support structure (52, 54).

17. Apparatus according to any one of claims 10 to 16, **characterized in that** said shaped induction heating members (30a, 30b, 40a, 40b) are made by means of tubular members.

## Patentansprüche

1. Verfahren zur gegenseitigen Befestigung der Elemente einer Verbundplatte, insbesondere für eine KraftfahrzeugKarosserie, wobei die Verbundplatte (10) zwei aneinander angrenzende, metallische Blechelemente umfasst, die aus einem Gerippe (12) und einem Verkleidungspaneel (18) bestehen, die aneinander angrenzen und an ihren Außenrändern (12a, 18a) durch Falzen vormontiert sind, wobei das Gerippe (12) einen im wesentlichen netzförmigen Aufbau hat, der sich aus einer Reihe von Rippen (14) zusammensetzt, zwischen denen wenigstens eine Aussparung (16) ausgebildet ist, die durch Ränder (16a) begrenzt ist, die an einem zugehörigen Bereich der Innenfläche des Verkleidungspaneels (18) angrenzen, und wobei zwischen die Ränder (16a) jeder Aussparung (16) und das Verkleidungspaneel (18) ein Semistruktur-Polymerkleber (20) eingebracht wird,
**dadurch gekennzeichnet, dass** in einem Verfahrensschritt die Verbundplatte (10) einer Erhitzung in einem Bereich unterzogen wird, in dem sich die Ränder (16a) jeder Aussparung (16) des Gerippes (12) befinden, so dass der Semistrukturkleber (20) aus einem im wesentlichen flüssigen Abgabezustand in einen viskosen Vorpolymerisationszustand überführt wird, in dem er eine wenigstens teilweise Verbindung des entsprechenden Randes (16a) der Aussparung (16) mit dem Verkleidungspaneel (18) herstellt.

2. Verfahren nach Anspruch 1, **dadurch gekennzeichnet, dass** die Erhitzung durch Induktionsheizmittel (26) erfolgt.

3. Verfahren nach Anspruch 1 oder 2, **dadurch gekennzeichnet, dass** die Erhitzung von nur einer Seite der Verbundplatte (10) aus durchgeführt wird, vorzugsweise auf der Seite des Gerippes (12), die von dem Verkleidungspaneel (18) abgewandt ist.

4. Verfahren nach Anspruch 1 oder 2, **dadurch gekennzeichnet, dass** die Erhitzung gleichzeitig von zwei gegenüberliegenden Seiten der Verbundplatte (10) aus durchgeführt wird, nämlich auf der Seite des Gerippes (12), die von dem Verkleidungspaneel (18) abgewandt ist, und auf der Seite des Verkleidungspaneels (18), die von dem Gerippe (12) abgewandt ist.

5. Verfahren nach einem der Ansprüche 1 bis 4, **dadurch gekennzeichnet, dass** vor dem Erhitzen die folgenden Schritte durchgeführt werden:
- Aufsetzen der Verbundplatte (10) auf eine entsprechend geformte Tragstruktur (52, 54) und
- Betätigen von Referenz- und Haltemitteln (58, 60), die der Tragstruktur (52, 54) zugeordnet sind, um die Elemente (12, 18) der Verbundplatte (10) während des Erhitzens in einer vorbestimmten Berührungsstellung zu halten.

6. Verfahren nach einem der Ansprüche 1 bis 5, **dadurch gekennzeichnet, dass** ein Struktur-Polymerkleber zwischen die Außenränder (12a, 18a) der Elemente (12, 18) der Verbundplatte (10) eingebracht wird und dass diese Außenränder (12a, 18a) der Verbundplatte (10) durch Hilfsinduktionsmittel (36) erhitzt werden.

7. Verfahren nach Anspruch 6, **dadurch gekennzeichnet, dass** die Außenränder (12a, 18a) und die Ränder (16a) jeder Aussparung (16) des Gerippes (12) gleichzeitig erhitzt werden.

8. Vorrichtung zum gegenseitigen Befestigen der Elemente einer Verbundplatte, insbesondere für eine KraftfahrzeugKarosserie, **gekennzeichnet durch**:
- eine geformte Tragstruktur (52, 54) zum Aufnehmen einer Verbundplatte (10) mit zwei metallischen, aneinander angrenzenden Blechelementen (12, 18), von denen eines ein Gerippe (12) mit einem im wesentlichen netzförmigen Aufbau ist, der sich aus einer Reihe von Rippen (14) zusammensetzt, zwischen denen wenigstens eine Aussparung (16) ausgebildet ist, die **durch** Ränder (16a) begrenzt ist, während das andere Blechelement ein Verkleidungspaneel (18) ist, wobei ein Semistruktur-Polymerkleber (20) zwischen den Rand (16a) jeder Aussparung (16) des Gerippes (12) und das Verkleidungspaneel (18) eingebracht ist, und
- Induktionsheizmittel (26), die der Tragstruktur (52, 54) zugeordnet so ausgebildet sind, dass sie eine lokale Erhitzung der Verbundplatte (10) in Bereichen durchführen, in denen sich der Rand (16a) jeder Aussparung (16) des Gerippes (12) befindet, so dass der Semistrukturkleber (20) aus einem im wesentlichen flüssigen Abgabezustand in einen viskosen Vorpolymerisationszustand überführt wird, in dem er eine wenigstens teilweise Verbindung des entsprechenden Randes (16a) der Aussparung (16) mit dem Verkleidungspaneel (18) herstellt.

9. Vorrichtung nach Anspruch 8, **dadurch gekennzeichnet, dass** die Tragstruktur (52, 54) eine Reihe von Blöcken (54) aus nicht magnetischem Material hat, die auf einem Rahmen (52) abgestützt sind.

10. Vorrichtung nach Anspruch 8 oder 9, **dadurch gekennzeichnet, dass** das Induktionsheizmittel (26) ein geformtes Hauptheizelement (30a) hat, das auf einer dem Gerippe (12) zugewandten Seite der Verbundplatte (10) positionierbar ist.

11. Vorrichtung nach Anspruch 8 oder 9, **dadurch gekennzeichnet, dass** das Induktionsheizmittel (26) zur gleichzeitigen Erhitzung der Verbundplatte (10) auf deren gegenüberliegenden Seiten ausgebildet ist und ein geformtes Hauptheizelement (30a) hat, das auf einer ersten, dem Gerippe (12) zugewandten Seite der Verbundplatte (10) positionierbar ist, sowie ein geformtes sekundäres Induktionsheizelement (30b), das auf einer zweiten, dem Verkleidungspaneel (18) zugewandten Seite der Verbundplatte (10) positionierbar ist.

12. Vorrichtung nach Anspruch 10 oder 11, **dadurch gekennzeichnet, dass** das Hauptheizelement (30a) auf Abstand von der geformten Tragstruktur (52, 54) gebracht werden kann, so dass die Verbundplatte (10) auf der Tragstruktur (52, 54) abgestützt und auch von dieser entfernt werden kann.

13. Vorrichtung nach Anspruch 12, **dadurch gekennzeichnet, dass** das Hauptheizelement (30a) einen Schwenkbereich hat.

14. Vorrichtung nach einem der Ansprüche 8 bis 13, **dadurch gekennzeichnet, dass** der Tragstruktur (52, 54) Referenz- und Haltemittel (58, 60) zugeordnet sind, die eine korrekte Positionierung und gegenseitige Fixierung der Elemente (12, 18) der Verbundplatte (10) während der Betätigung der Heizmittel (26) gewährleisten.

15. Vorrichtung nach einem der Ansprüche 8 bis 14, **dadurch gekennzeichnet, dass** zwischen die Außenränder (12a, 18a) der Elemente (12, 18) der Verbundplatte (18) ein Struktur-Polymerkleber eingebracht wird und dass die Vorrichtung (46) Hilfsinduktionsheizmittel (36) aufweist, die der geformten Tragstruktur (52, 54) zugeordnet und so ausgelegt sind, dass sie die Verbundplatte (10) an ihren Außenrändern (12a, 16a) erhitzen, um den entsprechenden Strukturkleber in einem Vorpolymerisationszustand zu versetzen.

16. Vorrichtung nach Anspruch 15, **dadurch gekennzeichnet, dass** die Hilfsheizmittel (36) wenigstens ein Hilfsheizelement (40a, 40b) haben, das mit seiner Form an den Außenrand der Verbundplatte (10) angepasst und in dem Bereich des Außenrandes der von der Tragstruktur (52, 54) aufgenommenen Verbundplatte (10) positionierbar ist.

17. Vorrichtung nach einem der Ansprüche 10 bis 16, **dadurch gekennzeichnet, dass** die geformten Induktionsheizelemente (30a, 30b, 40a, 40b) aus rohrförmigen Elementen bestehen.

## Revendications

1. Procédé de fixation des éléments d'un panneau composite, plus particulièrement d'une carrosserie de véhicule à moteur, dans lequel le panneau composite (10) comprend deux éléments formant des plaques métalliques disposés de manière adjacente, lesquels éléments se composent d'une pièce (12) formant armature et d'un panneau de couverture (18) disposés de manière adjacente et préalablement fixés l'un à l'autre par agrafage au niveau de leurs bords périphériques (12a, 18a), la pièce (12) formant armature comprenant une structure générale réticulaire définie par une série de parties formant nervures (14) entre lesquelles est définie au moins une cavité (16) délimitée par des bords (16a), lesdits bords (16a) étant agencés de manière adjacente à une zone correspondante de la surface intérieure du panneau de couverture (18), un adhésif polymère du type semi-structurel (20) étant interposé entre les bords (16a) de chaque cavité (16) et le panneau de couverture (18),
**caractérisé en ce qu'**il comprend l'étape consistant à soumettre le panneau composite (10) à une opération de chauffage localisée au niveau d'une zone correspondant aux bords (16a) de chaque cavité (16) de la pièce (12) formant armature, de manière à amener les adhésifs semi-structurels (20) respectifs à passer d'un état d'écoulement substantiellement liquide à un état visqueux et pré-polymerisé dans lequel ils permettent de relier au moins partiellement le bord correspondant (16a) de la cavité (16) au panneau de couverture (18).

2. Procédé selon la revendication 1, **caractérisé en ce que** ladite opération de chauffage est exécutée par des moyens (26) de chauffage par induction.

3. Procédé selon la revendication 1 ou 2, **caractérisé en ce que** ladite opération de chauffage est exécutée depuis l'un des côtés du panneau composite (10), de préférence depuis le côté de celui-ci adjacent à la pièce (12) formant armature, du côté opposé au panneau de couverture (18).

4. Procédé selon la revendication 1 ou 2, **caractérisé en ce que** ladite opération de chauffage est exécutée simultanément depuis les côtés opposés du panneau composite (10), en particulier depuis un côté de celui-ci adjacent à la pièce (12) formant armature, du côté opposé au panneau de couverture (18), et depuis le côté adjacent au panneau de couverture (18), du côté opposé à la pièce (12) formant armature.

5. Procédé selon l'une quelconque des revendications 1 à 4, **caractérisé en ce que**, avant d' exécuter ladite opération de chauffage, les étapes suivantes sont mises en oeuvre :
- disposer le panneau composite (10) sur une structure de support (52, 54) profilée, et
- utiliser des moyens de référence et d'immobilisation (58, 60) associés à ladite structure de support (52, 54), de manière à maintenir les éléments (12, 18) du panneau composite (10) dans une configuration de contact prédéterminée lors de l'exécution de l'opération de chauffage.

6. Procédé selon l'une quelconque des revendications 1 à 5, **caractérisé en ce qu'**un adhésif polymère de type structurel est interposé entre les bords périphériques (12a, 18a) des éléments (12, 18) du panneau composite (10), et **en ce qu'**il comprend l'étape consistant à chauffer le bord périphérique (12a, 18a) du panneau composite (10) par des moyens auxiliaires de chauffage par induction (36).

7. Procédé selon la revendication 6, **caractérisé en ce que** les étapes consistant à chauffer le panneau composite (10) au niveau de son bord périphérique (12a, 18a) et au niveau des bords (16a) de chaque cavité (16) de la pièce (12) formant armature, sont exécutées de manière simultanée.

8. Appareil permettant de fixer les éléments d'un panneau composite, plus particulièrement d'une carrosserie de véhicule à moteur, **caractérisé en ce qu'**il comprend :
- une structure de support profilée (52, 54) adaptée pour supporter un panneau composite (10) comprenant deux éléments formant plaques métalliques (12, 18) disposés de manière adjacente, l'un desdits éléments étant une pièce (12) formant armature comprenant une structure générale réticulaire définie par une série de parties formant nervures (14) entre lesquelles est définie au moins une cavité (16) délimitée par des bords (16a), l'autre élément étant un panneau de couverture (18), un adhésif polymère de type semi-structurel (20) étant interposé entre le bord (16a) de chaque cavité (16) de la pièce (12) formant armature et le panneau de couverture (18), et
- des moyens (26) de chauffage par induction associés à la structure de support profilée (52, 54) et adaptés pour provoquer un chauffage localisé du panneau composite (10) au niveau d'une zone correspondant aux bords (16a) de chaque cavité (16) de la pièce (12) formant armature, de sorte que les adhésifs semi-structurels (20) respectifs passent d'un état d'écoulement substantiellement liquide à un état visqueux et pré-polymerisé dans lequel ils permettent de relier au moins partiellement le bord correspondant (16a) de la cavité (16) au panneau de couverture (18).

9. Appareil selon la revendication 8, **caractérisé en ce que** ladite structure de support (52, 54) comprend une série de blocs de matériau non magnétique (54) supportés par une structure (52).

10. Appareil selon la revendication 8 ou 9, **caractérisé en ce que** lesdits moyens (26) de chauffage par induction comprennent un organe profilé principal (30a) de chauffage par induction, qui peut être agencé d'un côté du panneau composite (10) dans une zone adjacente à la pièce (12) formant armature.

11. Appareil selon la revendication 8 ou 9, **caractérisé en ce que** lesdits moyens (26) de chauffage par induction sont susceptibles de provoquer un chauffage simultané sur les côtés opposés du panneau composite (10), et comprennent un organe profilé principal de chauffage par induction (30a) qui peut être agencé sur un premier côté du panneau composite (10) dans une zone adjacente à la pièce (12) formant armature, ainsi qu'un organe profilé secondaire de chauffage par induction (30b) qui peut être agencé sur un second côté du panneau composite (10) dans une zone adjacente au panneau de couverture (18).

12. Appareil selon la revendication 10 ou 11, **caractérisé en ce que** ledit organe principal de chauffage par induction (30a) est démontable de manière à pouvoir être éloigné de la structure de support profilée (52, 54), de sorte que soient permises aussi bien la mise en place du panneau composite (10) sur une telle structure (52, 54) que le retrait de celui-là par rapport à celle-ci.

13. Appareil selon la revendication 12, **caractérisé en ce que** ledit organe principal de chauffage par induction (30a) comprend une zone d'articulation.

14. Appareil selon l'une quelconque des revendications 8 à 13, **caractérisé en ce que** des moyens de référence et d'immobilisation (58, 60) sont associés à la structure de support (52, 54), ces moyens étant adaptées pour assurer le positionnement correct et l'immobilisation des éléments (12, 18) du panneau composite (10) l'un par rapport à l'autre lorsque lesdits moyens de chauffage (26) sont en action.

15. Appareil selon l'une quelconque des revendications 8 à 14, **caractérisé en ce qu'**un adhésif polymère de type structurel est interposé entre les éléments (12, 18) du panneau composite (10) au niveau des bords périphériques (12a, 18a) de celui-ci, et **en ce que** l'appareil (46) inclut des moyens auxiliaires de chauffage par induction (36) associés à la structure de support profilée (52, 54) et adaptés à provoquer le chauffage du panneau composite (10) au niveau de son bord périphérique (12a, 16a), de sorte que l'adhésif structurel atteigne un état de pré-polymérisation.

16. Appareil selon la revendication 15, **caractérisé en ce que** lesdits moyens auxiliaires de chauffage par induction (36) comprennent au moins un organe auxiliaire de chauffage par induction (40a, 40b) conformé de manière à correspondre à la périphérie du panneau composite (10) et destiné à être agencé à proximité du bord périphérique d'un panneau composite (10) disposé sur la structure de support profilée (52, 54).

17. Appareil selon l'une quelconque des revendications 10 à 16, **caractérisé en ce que** lesdits organes profilés de chauffage par induction (30a, 30b, 40a, 40b) sont réalisés au moyen d'éléments tubulaires.
